**Europäisches Patentamt**

**European Patent Office**

**Office européen des brevets**

(19)

(11) Veröffentlichungsnummer: **0 126 937**
**B1**

(12) ## EUROPÄISCHE PATENTSCHRIFT

(45) Veröffentlichungstag der Patentschrift:
03.02.88

(51) Int. Cl.⁴: **G 01 B 3/00**

(21) Anmeldenummer: **84104237.7**

(22) Anmeldetag: **14.04.84**

(54) Längenmesseinrichtung.

(30) Priorität: **30.05.83 DE 3319600**

(43) Veröffentlichungstag der Anmeldung:
**05.12.84 Patentblatt 84/49**

(45) Bekanntmachung des Hinweises auf die Patenterteilung:
**03.02.88 Patentblatt 88/5**

(84) Benannte Vertragsstaaten:
**AT CH DE FR GB IT LI NL SE**

(56) Entgegenhaltungen:
**DE-C-2 518 745**
**DE-C-2 712 421**
**FR-A-2 438 822**
**GB-A-2 042 183**

(73) Patentinhaber: **Dr. Johannes Heidenhain GmbH,
Nansenstrasse 17, D-8225 Traunreut (DE)**

(72) Erfinder: **Oberhans, Johann, D-8221 Buchöster 36
Post Emertsham (DE)**

## Beschreibung

Die Erfindung betrifft eine Längenmeßeinrichtung gemäß dem Oberbegriff des Anspruchs 1.

Bei Längenmeßeinrichtungen der obigen Gattung ist es bekannt, ein Maßband auf einem biegesteifen Maßbandträger mittels einer elastischen Klebeschicht zu befestigen und die Enden des Maßbandes am Maßbandträger durch Punktschweißen starr zu befestigen (Dr. Johannes Heidenhain "Meßtechnische Information", 8. Ausgabe, März 1980). Eine nachträgliche Korrektur des Maßbandes beispielsweise zur Korrektur von Maschinenfehlern ist dann nicht mehr ohne weiteres möglich.

Der GB-A-2 042 183 entnimmt man eine Längenmeßeinrichtung, bei der ein Maßstab mit einer Teilung direkt an einem Maschinenteil einer Bearbeitungsmaschine befestigt ist und die Teilung des Maßstabs von einer mit einem anderen Maschinenteil verbundenen Abtasteinheit abgetastet wird. Der Maßstab weist in Meßrichtung eine durchgehende Bohrung auf, in der ein Zugbolzen oder ein Druckbolzen zur Stauchung oder zur Dehnung des Maßstabs gemäß einem linearen Fehlerverlauf angeordnet ist.

In der DE-C-25 18 745 ist eine Längenmeßeinrichtung beschrieben, bei der ein Maßstab mit einer Teilung in einem Gehäuse mittels einer Klebeschicht geringfügig verschiebbar angeordnet ist. Das Gehäuse ist an beiden Enden mittels Befestigungselemente an einem Objekt befestigt; die Teilung des Maßstabs wird von einer mit einem anderen Objekt verbundenen Abtasteinheit abgetastet. Die Enden des Maßstabs werden jeweils von einer Stauch- oder Dehneinrichtung in den beiden Befestigungselementen zur linearen Fehlerkorrektur beaufschlagt.

Aus der DE-C-27 12 421 ist noch eine Längenmeßeinrichtung mit einem Maßband bekannt, das mit einem Ende starr am zu messenden Objekt befestigt ist und dessen anderes Ende im Gegensatz zur vorgenannten Meßeinrichtung direkt von einer Korrektureinrichtung in Form einer Dehneinrichtung beaufschlagt wird, die gleichfalls am Objekt befestigt ist. Diese Anordnung ermöglicht gleichfalls eine nachträgliche Längenänderung des Maßbandes zur Fehlerkorrektur, weist aber ebenfalls den Nachteil einer aufwendigen, die Raumform der Meßeinrichtung vergrößernden Bauweise auf und bedingt wegen der Vielzahl der Bauteile eine aufwendige Montage.

Der Erfindung liegt die Aufgabe zugrunde, bei einer Längenmeßeinrichtung mit einem zumindest an beiden Enden starr am Maßstabträger befestigten Maßstab eine Möglichkeit zur Korrektur insbesondere von Teilungsfehlern und/oder Maschinenfehlern anzugeben, durch die der konstruktive Aufbau und die Bauform der Meßeinrichtung im wesentlichen unverändert bleibt.

Diese Aufgabe wird erfindungsgemäß durch die Merkmale des Anspruchs 1 gelöst.

Die mit der Erfindung erzielten Vorteile bestehen insbesondere darin, daß die vorgeschlagene Längenmeßeinrichtung wegen ihres konstruktiv einfachen Aufbaues eine preisgünstig zu fertigende Einheit aus wenigen Teilen bildet, die zeitgünstig am zu messenden Objekt befestigt werden kann und die eine einfache Korrektur von Teilungsfehlern und/oder Maschinenfehlern am Objekt erlaubt. Da die Raumform der Meßeinrichtung unverändert bleibt, ist ein flexibler Einsatz dieser Meßeinrichtung insbesondere bei Maschinen gegeben, bei denen nur wenig Platz zum Anbau von Meßeinrichtungen zur Verfügung steht.

Vorteilhafte Weiterbildungen der Erfindung entnimmt man den Unteransprüchen.

Ein Ausführungsbeispiel der Erfindung wird anhand der Zeichnung näher erläutert.

Es zeigen

Figur 1 eine Draufsicht auf eine Längenmeßeinrichtung an den zu messenden Objekten,

Figur 2a, b eine Stirnansicht und eine Seitenansicht der Längenmeßeinrichtung und

Figur 3 eine Seitenansicht einer weiteren Längenmeßeinrichtung.

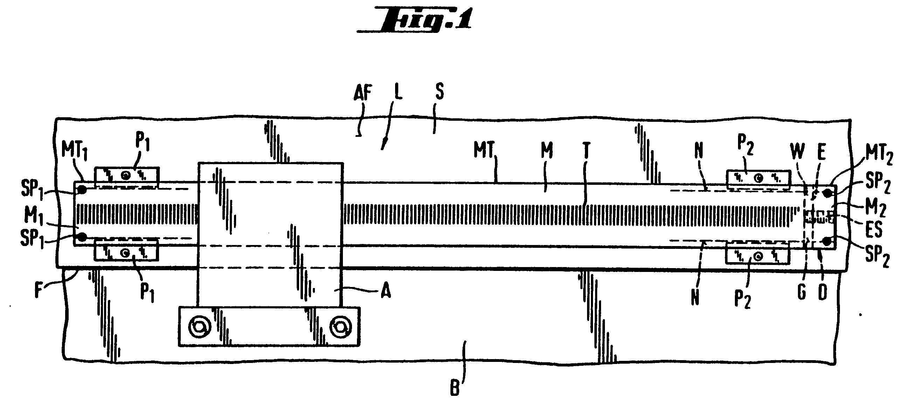

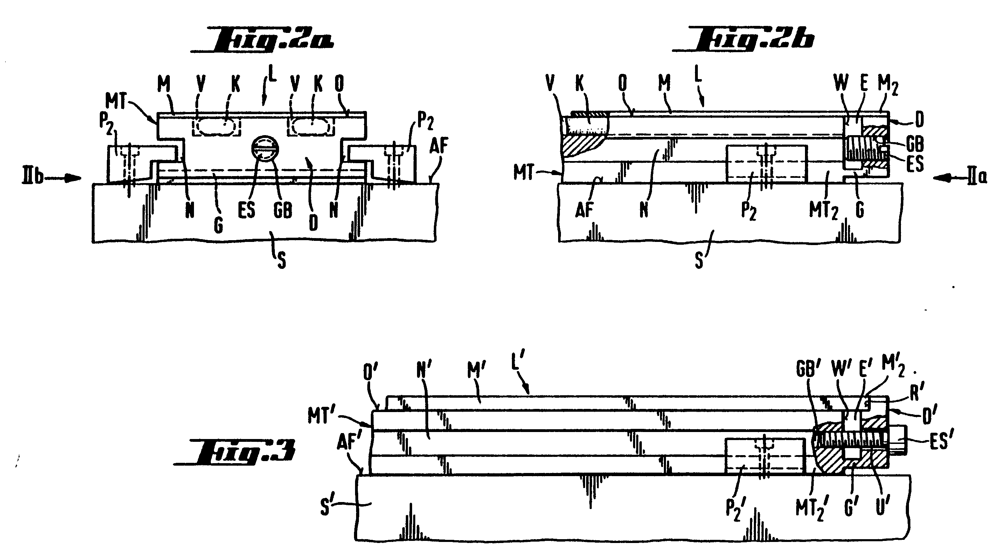

Nach Figur 1 und 2 ist an einer Anbaufläche AF eines Schlittens S einer nicht dargestellten Werkzeugmaschine ein biegesteifer Maßstabträger MT einer Längenmeßeinrichtung L an einem Ende $MT_1$ mittels zweier Spannpratzen $P_1$ und am anderen Ende $MT_2$ mittels zweier Spannpratzen $P_2$ befestigt, die in zwei Nuten N in den Seitenflächen des Maßstabsträgers MT eingreifen. Auf der Oberfläche O des Maßstabträgers MT ist ein Maßstab M in Form eines flexiblen Maßbandes mit einer Teilung T mittels zweier elastischer Klebeschichten K in zwei längserstreckten Vertiefungen V in der Oberfläche O befestigt. Die Klebeschichten K erlauben eine geringfügige Längsverschiebung des Maßbandes M in Meßrichtung bezüglich des Maßstabträgers MT.

Das eine Ende $M_1$ des Maßbandes M ist am Ende $MT_1$ des Maßstabträgers MT mittels zweier Schweißpunkte $SP_1$ und das andere Ende $M_2$ des Maßbandes M mittels zweier Schweißpunkte $SP_2$ am Ende $MT_2$ des Maßstaträgers MT befestigt. Eine Abtasteinheit A zur Abtastung der Teilung T ist in beliebiger Weise mit einem Brett B der Werkzeugmaschine verbunden. Der Schlitten S is relativ zum Bett B auf einer Führung F des Betts B in Meßrichtung verschiebbar; der Schlitten S und das Bett B stellen die zu messenden Objekte dar.

Zur Korrektur von Teilungsfehlern und/oder Maschinenfehlern ist zwischen den Spannpratzen $P_2$ an Ende $MT_2$ des Maßstabträgers MT und den Schweißpunkten $SP_2$ für das Maßband M im Maßstabträger MT ein Gelenk G mit senkrecht zur Meßrichtung liegender Drehachse vorgesehen. Dieses Gelenk G besteht aus einem Steg, der durch einen Einschnitt E senkrecht zur Meßrichtung im Maßstabträger MT gebildet ist und im Maßstabträger MT senkrecht zur Meßrichtung parallel zur Anbaufläche AF des Schlittens S verläuft. Durch die Querschnittsverringerung in Form des Einschnitts E ist das Ende $MT_2$ des Maßstabträgers MT gleichzeitig als Dehneinrichtung D ausgebildet, an dem das Ende $M_2$ des Maßbandes M mittels der Schweißpunkte $SP_2$ befestig ist; diese Dehneinrichtung D ist über das Gelenk G integrierender Bestandteil des Maßstabträgers MT. Die Einstellung der Dehneinrichtung D zur Dehnung des Maßbandes M auf das erforderliche Längenmaß erfolgt durch eine Einstellschraube ES, die in einer in Meßrichtung verlaufenden Gewindebohrung GB in der Dehneinrichtung D in der Nähe des Maßbandes M angeordnet ist und sich an einer der Dehneinrichtung D gegenüberliegenden Wandung W des Einschnitts E abstützt. Die Dehneinrichtung D mitsamt dem Steg sind von der Anbaufläche AF des Schlittens S beabstandet. Die Dehnung des Maßbandes M erfolgt somit durch eine Längenänderung des Maßstabträgers MT.

Bei der Montage der Längenmeßeinrichtung L werden die Enden $M_1$, $M_2$ des auf Untermaß verkürzt gefertigten Maßbandes M am Ende $MT_1$ des Maßstabträgers MT und am Dehnelement D mittels der Schweißpunkte $SP_1$, $SP_2$ befestigt. Anschließend kann das Maßband M mittels der Einstellschraube ES auf das richtige Längenmaß justiert werden. Nach dem Anbau der Längenmeßeinrichtung L am Schlitten S der Werkzeugmaschine mittels der Spannpratzen $P_1$, $P_2$ kann gegebenenfalls eine weitere Justierung des Maßbandes M mittels der Einstellschraube ES zur Korrektur von Maschinenfehlern (z. B. Führungsfehlern der Maschinenführung F) erfolgen. Die Justierung des Maßbandes M auf das richtige Längenmeß sowie gegebenenfalls die Korrektur von Teilungsfehlern und/oder Maschinenfehlern kann auch gemeinsam nach dem Anbau der Längenmeßeinrichtung L am Schlitten S der Werkzeugmaschine vorgenommen werden.

In Figur 3 ist eine Längenmeßeinrichtung L' mit dem gleichen Aufbau wie die Längenmeßeinrichtung L der Figuren 1 und 2 gezeigt, deren gleichartigen Elemente dementsprechend die gleichen, aber oben gestrichenen Bezugszeichen aufweisen. An einer Anbaufläche AF' eines Schlittens S' einer nicht dargestellten Werkzeugmaschine ist ein biegesteifer Maßstabträger MT' der Längenmeßeinrichtung L' an einem Ende mittels zweier Spannpratzen (nicht gezeigt) und am anderen Ende $MT_2'$ mittels zweier Spannpratzen $P_2'$ befestigt, die in zwei Nuten N' in den Seitenflächen des Maßstabträger MT' eingreifen. Auf der Oberfläche O' des Maßstabträgers MT' ist ein biegesteifer Maßstab M' mit einer Teilung mittels einer elastischen Klebeschicht befestigt, die eine geringfügige Längsverschiebung des Maßstabs M' in Meßrichtung bezüglich des Maßstabträgers MT' erlaubt. Das eine Ende des Maßstabs M' ist in nicht gezeigter Weise beliebig an einem Ende des Maßstabträgers MT' befestigt, während das andere Ende $M_2'$ des Maßstabs M' an einer Anschlagfläche R' am anderen Ende $MT_2'$ des Maßstabträgers MT' fest anliegt.

Zur Korrektur von Teilungsfehlern und/oder Maschinenfehlern ist zwischen den Spannpratzen $P_2'$ am Ende $MT_2'$ des Maßstabträgers MT' und der Anschlagfläche R' für den Maßstab M' im Maßstabträger MT' ein Gelenk G' mit senkrecht zur Meßrichtung liegender Drehachse vorgesehen. Dieses Gelenk G' besteht aus einem Steg, der durch einen Einschnitt E' senkrecht zur Meßrichtung im Maßstabträger MT' gebildet ist und im Maßstabträger MT' senkrecht zur Meßrichtung parallel zur Anbaufläche AF' des Schlitterns S' verläuft. Durch die Querschnittsverringerung in Form des Einschnitts E' ist das Ende $MT_2'$ des Maßstabträgers MT' gleichzeitig als Staucheinrichtung D' ausgebildet, an dessen Anschlagfläche R' das Ende $M_2'$ des Masstabs M' anliegt; diese Staucheinrichtung D' ist über das Gelenk G' integrierender Bestandteil des Maßstabträgers MT'. Die Einstellung der Staucheinrichtung D' zur Stauchung des Maßstabs M' auf das erforderliche Längenmaß erfolgt durch eine Einstellschraube ES', die durch eine in Meßrichtung verlaufende Bohrung U' in der Staucheinrichtung D' in eine Gewindebohrung GB' in der Wandung W' des Einschnitts E' eingreift. Die Staucheinrichtung D' mitsamt dem Steg sind von der Anbaufläche AF' des Schlittens S' beabstandet. Die Stauchung des Maßstabs M' erfolgt somit durch eine Längenänderung des Maßstabträgers MT'.

Die Spanneinrichtung D, D' kann auch an beliebiger Stelle des Maßstabträgers MT, MT', beispielsweise in seiner Mitte oder an beiden Endbereichen vorgesehen sein. Zur Korrektur nichtlinearer Fehler können auch mehrere Spanneinrichtungen in Meßrichtung entsprechend dem Fehlerverlauf im Maßstabträger angeordnet sein. Es kann somit eine Korrektur beliebiger Fehler, die auch thermisch bedingt sein können, durchgeführt werden.

Neben einer Befestigung des Maßbandes durch eine Klebeschicht auf dem Maßstabträger kann das Maßband auch in einer Nut des Maßstabträgers eingezogen sein.

## Patentansprüche

1. Längenmeßeinrichtung, bei der eine Korrektur von Fehlern, insbesondere von Teilungsfehlern und/ oder Maschinenfehlern, erfolgt, mit einem Maßstab und einer die Teilung des Maßstabs abtastenden Abtasteinheit an zwei relativ zueinander verschieblichen Objekten, bei der ferner der Maßstab auf einem mit dem einen Objekt verbundenen gesonderten biegesteifen Maßstabträger in Meßrichtung geringfügig längsverschieblich angeordnet und zumindest an beiden Enden starr am Maßstabträger befestigt ist, dadurch gekennzeichnet, daß der Maßstabträger (MT; MT') selbst zwischen den beiden Enden (M₁, M₂; M₁', M₂') des Maßstabs (M; M') als wenigstens eine Korrektureinrichtung (D; D') für den Maßstab (M; M') ausgebildet ist und daß wenigstens ein Einstellmittel (ES; ES') der Korrektureinrichtung (D; D') direkt ausschließlich am Maßstabträger (MT; MT') angreift, so daß die Korrektur des an seinen Enden (M₁, M₂; M₁', M₂') starr befestigten Maßstabs (M; M') durch Längenänderung des Maßstabträgers (MT; MT') bewirkt wird.

2. Meßeinrichtung nach Anspruch 1, dadurch gekennzeichnet, daß die im Maßstabträger (MT) integrierte wenigstens eine Korrektureinrichtung (D) als Dehneinrichtung für den Maßstab (M) ausgebildet ist, der in Form eines flexiblen Maßbandes mittels wenigstens einer elastischen Klebeschicht (K) auf dem Maßstabträger (MT) geringfügig längsverschieblich angeordnet ist.

3. Meßeinrichtung nach Anspruch 1, dadurch gekennzeichnet, daß die im Maßstabträger (MT') integrierte wenigstens eine Korrektureinrichtung (D') als Staucheinrichtung für den biegesteifen Maßstab (M') ausgebildet ist, der mittels einer elastischen Klebeschicht auf dem Maßstabträger (MT') geringfügig längsverschieblich angeordnet ist.

4. Meßeinrichtung nach den Ansprüchen 1 - 3, dadurch gekennzeichnet, daß die Korrektureinrichtung (D; D') durch eine einstellbare Gelenkverbindung (G; G') mit senkrecht zur Meßrichtung verlaufender Drehachse im Maßstabträger (MT; MT') gebildet ist.

5. Meßeinrichtung nach Anspruch 4, dadurch gekennzeichnet, daß die Gelenkverbindung (G; G') in Form eines Steges durch eine Querschnittsverminderung im Maßstabträger (MT; MT') ausgebildet ist.

6. Meßeinrichtung nach Anspruch 4, dadurch gekennzeichnet, daß die Einstellung der Gelenkverbindung (G; G') durch das im Maßstabträger (MT; MT') vorgesehene Einstellmittel (ES; ES') in Form einer Zug- oder Druckschraube erfolgt.

7. Meßeinrichtung nach Anspruch 1, dadurch gekennzeichnet, daß wenigstens ein Endbereich (MT₂; MT₂') des Maßstabträgers (MT; MT') als Korrektureinrichtung (D; D') für den Maßstab (M; M') ausgebildet ist.

## Claims

1. Linear measuring device, in which a correction of errors, in particular of graduation errors and/or machine errors, takes place, with a scale and a scanning unit scanning the graduation of the scale on two objects which are displaceable relative to each other, in which furthermore the scale is arranged on a separate inflexible scale carrier, which is connected to the one object and is slightly longitudinally displaceable in measuring direction, and is rigidly fixed to the scale carrier at least at both ends, characterized in that the scale carrier (MT; MT') is itself designed between the two ends (M₁, M₂; M₁', M₂') of the scale (M; M') as at least one correction device (D; D') for the scale (M; M') and in that at least one adjustment means (ES; ES') of the correction device (D; D') acts directly and exclusively on the scale carrier (MT; MT'), so that the correction of the scale (M; M') rigidly fixed at its end; (M₁, M₂; M₁', M₂') is effected by changing the length of the scale carrier (MT; MT').

2. Measuring device according to Claim 1, characterized in that the at least one correction device (D) integrated in the scale carrier (MT) is designed as an elongation device for the scale (M), which is arranged slightly longitudinally displaceably on the scale carrier (MT) in the form of a flexible measuring tape, by means of at least one elastic adhesive layer (K).

3. Measuring device according to Claim 1, characterized in that the at least one correction device (D') integrated in the scale carrier (MT') is designed as a compression device for the inflexible scale (M'), which is arranged slightly longitudinally displaceably on the scale carrier (MT') by means of an elastic adhesive layer.

4. Measuring device according to Claims 1 - 3, characterized in that the correction device (D; D') is formed by an adjustable link joint (G; G') in the measuring carrier (MT; MT') with axis of rotation running perpendicular to the measuring direction.

5. Measuring device according to Claim 4, characterized in that the link joint (G; G') is designed in the form of a web by a cross-sectional reduction in the scale carrier (MT; MT').

6. Measuring device according to Claim 4, characterized in that the adjustment of the link joint (G; G') takes place by the adjustment means (ES; ES') provided in the scale carrier (MT; MT') in the form of a drawing in or pushing screw.

7. Measuring device according to Claim 1, characterized in that at least one end region (MT₂; MT₂') of the scale carrier (MT; MT') is designed as correction device (D; D') for the scale (M; M').

## Revendications

1. Dispositif de mesure de longueur dans lequel est effectuée une correction des erreurs, en particulier des erreurs de graduation et/ou des erreurs de machine, comprenant une règle graduée et une unité de balayage, explorant la graduation de la règle graduée, respectivement installées sur deux objets déplaçables l'un par rapport à l'autre, et dans lequel la règle graduée est, en outre, montée légèrement déplaçable longitudinalement dans le sens de la mesure sur un support rigide à la flexion séparé raccordé à l'un des objets et est fixée rigidement au support au moins aux deux extrémités, caractérisé par le fait que le support (MT; MT') est lui-même réalisé sous la forme d'au moins un dispositif de correction (D; D') pour la régle (M; M') entre les deux extrémités ($M_1$, $M_2$; $M_1'$, $M_2'$) de la régle (M, M') et qu'au moins un moyen de réglage (ES; ES') du dispositif de correction (D; D') agit directement exclusivement sur le support (MT; MT') de sorte que la correction de la règle graduée (M; M') rigidement fixée à ses extrémités ($M_1$, $M_2$; $M_1'$, $M_2'$) s'effectue par variation de la longueur du support (MT; MT').

2. Dispositif de mesure selon la revendication 1, caractérisé par le fait qu'au moins le dispositif de correction (D) intégré dans le support (MT) de la règle graduée est réalisé sous la forme d'un dispositif d'allongement pour la règle graduée (M) qui, sous la forme d'un décamètre à ruban flexible, est disposée légèrement déplaçable longitudinalement au moyen d'au moins une couche adhésive élastique (K) sur le support (MT).

3. Dispositif de mesure selon la revendication 1, caractérisé par le fait qu'au moins le dispositif de correction (D') intégré dans le support (MT') de la règle graduée est réalisé sous la forme d'un dispositif de compression pour la règle graduée (M') rigide à la flexion qui est disposée légèrement déplaçable longitudinalement au moyen d'une couche adhésive élastique sur le support (MT').

4. Dispositif de mesure selon les revendications 1-3, caractérisé par le fait que le dispositif de correction (D; D') est formé par un assemblage articulé réglable (G; G') à axe de rotation disposé perpendiculairement au sens de la mesure dans le support (MT; MT').

5. Dispositif de mesure selon la revendication 4, caractérisé par le fait que l'assemblage articulé (G; G') est réalisé sous la forme d'une nervure par une réduction de la section transversale dans le support (MT; MT') de la règle graduée.

6. Dispositif de mesure selon la revendication 4, caractérisé par le fait que le réglage de l'assemblage articulé (G; G') s'effectue par le moyen de réglage (ES; ES') prévu sous la forme d'une vis de traction ou de pression dans le support (MT; MT') de la règle graduée.

7. Dispositif de mesure selon la revendication 1, caractérisé par le fait qu'au moins une zone d'extrémité ($MT_2$; $MT_2'$) du support (MT; MT') de la règle graduée est réalisée sous la forme d'un dispositif de corrections (D; D') pour la règle graduée (M; M').

**Fig.1**